# EUROPÄISCHE PATENTSCHRIFT

(11) **EP 0 611 425 B1**
(45) Veröffentlichungstag und Bekanntmachung des Hinweises auf die Patenterteilung: **31.01.1996**
(21) Anmeldenummer: 92923434.2
(22) Anmeldetag: 12.11.1992
(51) Int. Cl.: F16H 59/04, F16H 63/30

(54) **SCHALTEINRICHTUNG FÜR DIE SCHALTUNGSBETÄTIGUNG VON MEHRSTUFENSCHALTGETRIEBEN FÜR KRAFTFAHRZEUGE**
GEARSHIFTING ARRANGEMENT FOR ACTUATING MOTOR VEHICLE MULTI-SPEED GEARBOXES
SYSTEME DE CHANGEMENT DE VITESSE POUR LA COMMANDE DE BOITES DE VITESSES MULTI-ETAGEES DE VEHICULES AUTOMOBILES

(30) Priorität: 12.11.1991 DE 4137145
(43) Veröffentlichungstag der Anmeldung: 24.08.1994
(73) Patentinhaber: ZF FRIEDRICHSHAFEN Aktiengesellschaft, D-88038 Friedrichshafen (DE)
(72) Erfinder: MILBRADT, Gerhard, D-7990 Friedrichshafen 1 (DE); GAZYAKAN, Ünal, D-7990 Friedrichshafen (DE)
(86) Internationale Anmeldenummer: EP9202604
(87) Internationale Veröffentlichungsnummer: WO9310377

(56) Entgegenhaltungen:
- DE-A- 1 780 027
- DE-A- 2 550 484
- DE-C- 2 750 275

## Beschreibung

Die Erfindung bezieht sich auf eine Schalteinrichtung für die Schaltungsbetätigung von Mehrstufenschaltgetrieben für Kraftfahrzeuge gemäß Oberbegriff des Anspruchs 1.

Zur Schaltungsbetätigung solcherart Getriebe sind bereits verschiedene Schalteinrichtungen bekannt.

So sind rein mechanische Schalteinrichtungen bekannt, die über Schaltgestänge und verschiedene mechanische Bauteile die für die Schaltungsbetätigung notwendigen Verschiebebewegungen, beispielsweise an Schaltschwingen, durchführen. Ein sehr komplexer, viel Platz benötigender Aufbau mit aufwendiger Montage ist dadurch gegeben.

So ist aus der DE-PS 27 50 275 eine Schalteinrichtung gemäß Oberbegriff des Anspruchs 1 für die Schaltbetätigung von mehrgängigen Wechselgetrieben bekannt, mit mehreren um einen gehäusefesten Drehpunkt schwenkbaren Schaltschwingen, die je einer Schiebemuffe zugeordnet sind. Dabei wird der oberhalb des Drehpunkts der Schaltschwinge befindliche Schaltschwingenarm über ein im wesentlichen zur Getrieberäderachse parallel wirksames Schaltelement in die Schaltstellungen verschoben. Dieses Schaltelement bildet eine im Getriebegehäuse drehbar und axial verschiebbar angeordnete Schaltwelle, die über einen im H-Schema bewegbaren Handschalthebel bewegt wird. Die Verbindung zwischen Schaltwelle und Schaltschwinge wird durch formschlüssige Übertragungselemente erreicht. Wird eine Schiebemuffe aus der Neutrallage heraus verschoben, so werden alle anderen Schiebemuffen in ihrer mittleren Neutrallage verriegelt.

Zudem ist bekannt, die Gangschaltung elektrohydraulisch vorzunehmen, d. h., daß jeder Schaltschwinge ein hydraulischer Zylinder zugeordnet ist, beispielsweise mit einer Neutralstellung und zwei Gangstellungen. Um jedoch im allgemeinen eine ausreichende Schalt- und Funktionssicherheit zu erhalten, bedarf dieses bekannte System sehr komplexer elektronischer und hydraulischer Einrichtungen, wodurch Aufbau und Montage der Schalteinrichtung sehr aufwendig sind.

Aufgabe der Erfindung ist es, eine Schalteinrichtung oben genannter Gattung anzugeben, die einfach und platzsparend im Aufbau ist, eine sichere Schaltung und sichere Fixierung der Schaltschwingen in Neutralstellung der Schaltschwingen erlaubt und einfach zu fertigen und zu montieren ist.

Diese Aufgabe wird erfindungsgemäß durch eine Schalteinrichtung mit den kennzeichnenden Merkmalen des Anspruchs 1 gelöst. Vorteilhafte Ausgestaltungen sind in den Unteransprüchen beschrieben.

Demgemäß weist die erfindungsgemäße Schalteinrichtung als wesentliches Schaltelement eine einzige, parallel zur Getrieberäderachse in Neutral- und Gangstellungen verschiebbare Schubstange und mehrere, jeweils einer der Schaltschwingen zugeordneten Koppelmechanismen auf. Diese Koppelmechanismen setzen in unbetätigtem Zustand, also wenn keine Koppelkraft wirksam ist, jeweils eine unbetätigte Schaltschwinge in ihrer Neutralstellung an einem gehäusefesten Teil unbeweglich fest, wobei gleichzeitig die Schubstange ungehindert die Schaltbewegungen durchführen kann. Hierdurch kann eine Bewegung der Schaltschwingen, die zu einem unbeabsichtigten Einlegen eines Ganges führen, nicht stattfinden. In betätigtem bzw. eingerücktem Zustand stellen die einzeln betätigbaren Koppelmechanismen eine triebliche Verbindung zwischen der Schubstange und jeweils einer Schaltschwinge her, wobei gleichzeitig die Verbindung der Schaltschwinge mit dem gehäusefesten Teil gelöst wird, so daß die Schaltschwinge die Schaltbewegungen der Schubstange ungehindert durchführen kann. Die mehreren Schaltschwingen des mehrstufigen Kfz-Getriebes werden folglich jeweils einzeln an eine einzige schaltkraftübertragende Schubstange angekoppelt. Der Ankoppelmechanismus ist so gestaltet, daß jeder Koppelmechanismus unabhängig von den übrigen Koppelmechanismen betätigt werden kann, dabei jedoch auf die gleiche Schubstange zugreift, die für die Betätigung der restlichen Schaltschwingen zur Verfügung steht.

In Weiterbildung des Erfindungsgedankens weist der Koppelmechanismus einen senkrecht zur Schaltbewegungsrichtung der Schubstange bzw. der Richtung der Schaltkraft und gleichzeitig in Achsrichtung des Schaltschwingenarmes verschiebbaren Koppelbolzen auf, der mit seinem einen Ende an dem Schaltschwingenarm gelagert ist und mit seinem anderen Ende formschlüssig entweder in das gehäusefeste Teil oder in die Schubstange formschlüssig eingreift, je nach Einwirken oder Nichteinwirken einer Koppelkraft. In angekoppeltem Zustand ist die Schwinge mit der Schubstange mitverschieblich, während in abgekoppeltem und verriegeltem Zustand die Schwinge unbeweglich festgesetzt ist, und gleichzeitig weitere Schaltbewegungen der Schubstange zuläßt.

Von Vorteil ist desweiteren, wenn der Koppelmechanismus einen Koppelbolzen aufweist, mit einem mit dem Schaltschwingenarm in Verbindung stehenden Koppelschaft und mit einem Koppelkopf, der in entsprechende Ausnehmungen in der Schubstange und in dem gehäusefesten Teil formschlüssig eingreifend ein und ausschiebbar ist. Durch einfache geometrische Ausführung von Koppelschaft und Koppelkopf können einfache Ausnehmungen in Schubstange und gehäusefestem Teil einbringbar sein, so daß fertigungs- und montagemäßig vorteilhafte Ausgestaltungen realisierbar sind.

Die Schubstange kann in die drei Schaltstellungen, d.h. in die mittige Neutralstellung und, in Verschieberichtung gesehen, Vor- und Rück-Stellungen über einen Elektromotor in Verbindung mit beispielsweise einer Gewindespindel oder über einen pneumatisch oder hydraulisch betätigten Zylinder mit drei Stellungen, verschoben werden.

Vorteilhaft ist, daß in der Schubstange sich in Schaltrichtung erstreckende Langlöcher vorgesehen sind, durch die in ungekoppeltem Zustand die Koppelschäfte der Koppelbolzen verschieblich hindurchreichen. Wird also ein Gang eingelegt, dann ist immer nur eine Schaltschwinge über den Koppelbolzen mit der Schubstange verbunden, während die übrigen Schaltschwingen über den Koppelbolzen im gehäusefesten Teil so festgehalten sind, daß die Lanze ungehindert aus der Neutral-Koppelposition in die entsprechende Gangschaltstellung verschoben werden kann, immer nur die eine, angekoppelte Schaltschwinge mitnehmend.

Gemäß einer weiteren, vorteilhaften Ausgestaltung weist der Koppelbolzen, bzw. weisen die Koppelbolzen, eine im wesentlichen T-förmige Ausbildung auf, wobei die Kopfteil-Balken in montiertem Funktionszustand quer zur Schaltrichtung der Schubstange angeordnet sind. Entsprechend sind in der Schaltlanze insgesamt im wesentlichen kreuzförmige Ausnehmungen vorgesehen, wobei die Längsschlitze der Kreuzausnehmungen die Langlöcher für den Durchtritt der Koppelschäfte darstellen, während die Querschlitze zum Einrücken der Koppelköpfe, also der Kopfteil-Balken ausgelegt sind. Dabei kann von Vorteil sein, wenn der Koppelbolzen sowohl an seinem Koppelschaft, als auch an seinem Koppelkopf, jeweils einen im wesentlichen identischen Querschnitt aufweist. Hierdurch sind auch die Durchbrüche, also die Kreuzausnehmungen in der Schubstange sowohl in Längs- als auch in Querrichtung, und auch die Ausnehmung in der Gehäusewand, für den Koppelkopf und den Koppelschaft im wesentlichen gleich breit dimensioniert, was ebenfalls zur einfacheren Herstellungsweise beiträgt.

Zudem kann der Koppelkopf auch die Form eines runden oder ovalen Tellers aufweisen . Im Falle der Ausbildung des Koppelbolzens mit Koppelschaft mit rundem Querschnitt und Koppelkopf in Form eines runden Tellers, wird insgesamt ein relativ kostengünstig anzufertigendes Rotationsteil erhalten. Entsprechend sind dann die korrespondierenden Öffnugen in Gehäusewand und Schubstange runde Durchbrüche.

Schließlich können die Koppelbolzen eine im wesentlichen L-förmige Ausbildung aufweisen, wodurch deren Herstellung durch Biegen/Abkanten aus einem entsprechenden, einen runden oder rechteckigen Querschnitt besitzenden Profilstift möglich ist. Entsprechend sind dann die Öffnungen in Gehäuse und Schubstange im Verhältnis zur Längsachse der Schubstange einseitig ausladend eingebracht, in letzterer eine im wesentlichen T-förmige Ausnehmung bildend.

Dabei kann die zu den Schaltschwingen kraftübertragende Schubstange aus Flachstahl gefertigt sein, so daß diese insgesamt ein einfach zu fertigendes Bauteil mit geometrisch einfachen Öffnungen darstellt, die, abgesehen von der einfachen Fertigung, auch einen sehr geringen Bauraum im Inneren des Getriebegehäuses beansprucht. Die Schubstange kann jedoch auch aus jedem beliebigen, die Biegesteifheit erhöhenden Profilstahl, wie T-, und L-Profilstahl oder mit Sikken versehen, gefertigt sein. Von besonderem Vorteil ist, wenn das gehäusefeste Teil eine äußere Wand des Gehäuses ist und die Schubstange zwischen der äußeren Gehäusewand und dem äußeren Ende der Schaltschwingenarme der Schaltschwingen angeordnet ist. Das gehäusefeste Teil kann auch ein an der Innen- oder Außenseite der Gehäusewand befestigtes Bauteil, beispielsweise eine flache oder leicht flanschförmige Platte sein. Das hat fertigungstechnisch den großen Vorteil, daß die genau zu bearbeitende Öffnung 8, zur Festlegung des Koppelkopfes, nicht in der Gehäusewand, sondern in der separat einfach herstellbaren Platte einzubringen ist. Bei Anordnug der Platte an der Außenseite der Gehäusewand muß in der Gehäusewand nur ein größerer, von der Platte abgedeckter Durchbruch, eventuell bereits beim Gießen des Gehäuses, vorgesehen werden.

Eine weitere, sehr vorteilhafte Ausgestaltung wird dadurch erzielt, daß der Koppelschaft am äußeren Ende des Schaltschwingenarmes einer Schaltschwinge in Richtung der Wähl-bzw. Koppelkraft verachieblich geführt angebracht ist, wobei entweder Koppelschaft oder der Schaltschwingenarm zu Führungsteilen ausgebildet sind, die mit Führung ineinander in Richtung ihrer Längserstreckung gleiten. So kann beispielsweise das äußere Ende des Schaltschwingenarmes zu einem Führungszylinder ausgeweitet sein oder mit einem Führungszylinder versehen werden, in dem der einen runden Querschnitt aufweisende, stabförmig ausgebildete Koppelschaft des Koppelbolzens axial verschieblich gleitet. Dabei ist von Vorteil, wenn zwischen den Stirnseiten der Enden der beiden Teile, d.h. des Armes und des Schaftes, eine Druckfeder angeordnet ist, die den Koppelbolzen in unaktiviertem, d.h. uneingerücktem bzw. ungekoppeltem Zustand, aus der Lanze heraus in die entsprechende Öffnung in der Gehäusewand gedrückt hält. Lediglich zum Koppeln durch den Koppelbolzen der Schaltschwinge mit der Schubstange, muß eine Koppelkraft aufgebracht werden, die den Koppelbolzen entgegen der Kraft der Druckfeder mit dem Koppelkopf aus der Gehäuseausnehmung heraus und in den Querschlitz der Kreuzausnehmung in der Schubstange hineindrückt, die Koppelung der Schubstange mit der Schaltschwinge bewerkstelligend. Dabei kann die Einrichtung, die diese Wähl- oder Koppelkraft bereitstellt, eine Elektromagnet-Einrichtung oder ein hydraulischer oder pneumatischer Zylinder oder eine sonstige Einrichtung sein. Diese können jeweils außerhalb des Zylindergehäuses, beispielsweise an der Außenseite der Gehäusewand befestigt sein, so daß durch diese Einrichtungen im Innern des Getriebegehäuses kein Bauraum zur Verfügung gestellt werden muß. Zudem kann der Koppelbolzen nach Montage der Schubstange in einfacher Weise von der äußeren Gehäuseseite her eingelegt werden. Danach werden ebenfalls von außen die Betätigungseinrichtungen angebracht, wodurch eine einfachstmögliche Montage der Koppelmechanismen realisierbar ist.

Insgesamt kann zusammenfassend gesagt werden, daß durch die erfindungsgemäße Ausgestaltung der Schalteinrichtung die Ankoppelbarkeit von einzelnen Schaltschwingen an die Schaltlanze, ohne andere Schwingen zu bewegen, realisiert ist. Der Koppelbolzen kann durch die Lanze gesteckt werden, ohne daß es zu einer Koppelung kommt. Eine sichere Verbindung der Schwinge zum Gehäuse wird möglich. Zudem werden die sehr wichtigen Erfordernisse, nämlich einfache Fertigung und Montage bei geringem Bauraum, optimal erfüllt.

Nachfolgend wird die Erfindung anhand eines Ausführungsbeispiels unter Bezug auf die Zeichnung näher erläutert.

Es zeigt:
- Fig. 1: einen schematischen Querschnitt durch die Schalteinrichtung mit zwei Schaltschwingen, eine Schaltschwinge in angekoppeltem und eine zweite Schaltschwinge in abgekoppeltem und verriegeltem Zustand zeigend, und
- Fig. 2: einen Schnitt nach den Linien II-II nach Fig. 1 durch die Schubstange, die Position des Koppelkopfes in angekoppeletem bzw. in abgekoppelltem und verriegeltem Zustand der Schaltschwinge darstellend.

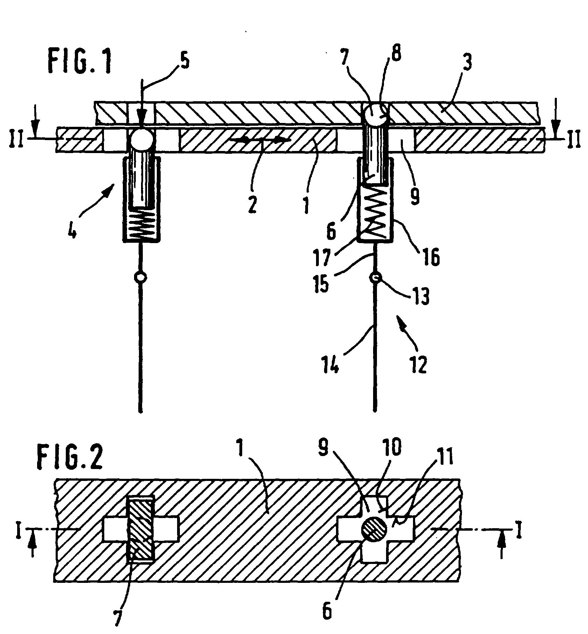

Wie insbesondere aus Fig. 1 ersichtlich ist, besteht der erfindungsgemäße Schalteinrichtung im wesentlichen aus einer Schubstange 1, deren Anfertigung aus Flachstahl-Material in Verbindung mit der Darstellung aus Fig. 2 gut erkennbar ist. Die Schubstange 1 ist entlang der mit einem schwarzen Pfeil gut gekennzeichneten Schaltkraft-Richtung 2 in die entsprechenden drei Schaltstellungen, also mittige Neutralstellung und in der Zeichnung dargestellten (Links- und Rechts-) Gangschaltstellungen verschiebbar an einem gehäusefesten Teil, hier der Gehäusewand 3, befestigt und zwar in unmittelbarer Nähe, möglicherweise direkt auf dieser gleitend.

Weitere wesentliche Bestandteile des Schalteinrichtung stellen die Koppelbolzen 4 dar, die senkrecht zur Breitenerstreckung der Schubstange 1, in der Zeichnungsdarstellung vertikal, in entsprechenden Öffnungen 8, 9 in Gehäuse und Schubstange verschieblich angeordnet sind. Die Verschiebung der Koppelbolzen 4 wird über Wähl- bzw. Koppelkräfte 5, die in der Zeichnung mit einem vertikalen Pfeil angedeutet sind, verursacht. Die entsprechenden Einrichtungen, die die Wähl-oder Koppelkräfte 5 und die Schaltkraft 2 erzeugen, sind zeichnerisch nicht dargestellt. Sie können elektrische oder elektromagnetische Einrichtungen, hydraulisch oder pneumatisch betätigte Zylinder oder sonstige Einrichtung sein.

In der dargestellten Ausführungsform weist der Koppelbolzen 4 bzw. weisen die Koppelbolzen 4 eine T-Form auf, mit je einem Koppelschaft 6 und einem Koppelschaft 7, die im wesentliche senkrecht zueinander ausgerichtet sind und im wesentlichen identische runde Querschnitte aufweisen. Die entsprechenden Öffnungen 8 in der Gehäusewand 3 sind der Form des Koppelkopfes 7 angepaßt, d.h. so ausgelegt, daß die Koppelköpfe in diese leicht ein- und ausrückbar sind. Zumindest leichte, aber auch große Einlaufschrägen an den Ein-und Ausrückseiten können da von Vorteil sein.

In der Schubstange 1 sind kreuzförmige Durchbrüche bzw. Ausnehmungen 9 vorgesehen, die aus einem Querschlitz 10 und einem Längsschlitz 11 zusammengesetzt sind. Der Querschlitz 10 korrespondiert mit der Öffnung 8 in der Gehäusewand 3, insbesondere dimensionsmäßig und dient ebenfalls der Aufnahme des Koppelkopfes 7 jedoch in angekoppeltem Zustand. Der Querschlitz 10 der Lanze kann jedoch auch etwas breiter ausgelegt sein als die korrespondiernde Öffnung 8 des Gehäuses, wodurch ein leichteres Koppeln, insbesondere bei hoher Schaltgeschwindigkeit, möglich ist. Der Längsschlitz 11 wiederum ist zumindest in seinen Querdimensionen ähnlich ausgelegt wie der Querschlitz 10 in seiner Längsdimension, also zur verschieblichen Aufnahme des Koppelschaftes 6, wobei insbesondere darauf zu achten ist, daß diese Aufnahme reibungsfrei ausgelegt wird, um die Schaltkräfte der Schaltlanze möglichst niedrig auslegen zu helfen. Selbstverständlich können auch die kreuzförmigen Durchbrüche, insbesondere deren Querschlitze 10 mit Einlaufschrägen sowohl in vertikaler als auch in horizontaler Richtung versehen sein, um ein weiches Einrücken bzw. Ankoppeln zu ermöglichen.

Zur Schalteinrichtung gehören auch die Schaltschwingen 12, die in an sich bekannter Weise jeweils um einen gehäusefesten Drehpunkt 13 so verschwenkbar sind, so daß ihre unteren Schaltgabeln 14, die mit hier nicht dargestellten Schaltmuffen oder ähnlichen Gangschaltbauteilen das Einrücken des entsprechend angewählten Ganges bzw. der Gangstufe bewerkstelligen. Die Schaltschwingen 12 weisen desweiteren je einen im wesentlichen in der gleichen Ebene mit der Schaltgabel 14 sich erstreckenden Schaltarm 15 auf, der der Übernahme der Schaltkraft 2, in angekoppeltem Zustand der Schaltschwinge 12, dient.

Der Schaltschwingenarm 15 ist an seinem oberen Ende zu einem Führungszylinder 16 aufgeweitet bzw. kann an seinem äußeren Ende mit einem solchen Führungszylinder 16 ausgerüstet sein. Es kann jedoch auch jede andere Axialführung dienlich sein. In der zylindrischen Innenöffnung des Führungszylinders 16 ist axial verschieblich geführt der Koppelschaft 6 des Koppelteiles 4 angeordnet. Zwischen der unteren Stirnseite des Koppelschaftes 6 und dem inneren Boden der Zylinderführung 16 ist eine Rückhol-Druckfeder 17 angeordnet. Diese Druckfeder 17 ist derart vorgespannt ausgelegt, daß sie den Koppelbolzen 4 nach oben, d.h. in Richtung der Gehäusewand 3 gedrückt hält. Somit wird bei Nichtvorhandensein der Wähl- bzw. Koppelkraft 5 und bei Neutral-bzw. Mittelstellung der Schubstange 1, der Koppelbolzen 4 mit seinem Koppelkopf 7 in die Öffnung 8 der Gehäusewand 3 hineingeschoben, bzw. hineingedrückt gehalten. Hierdurch wird die Schaltschwinge 12 an der Gehäusewand 3 unbeweglich festgesetzt, so daß ein ungewolltes Verschieben der Schaltschwinge und dadurch ein unbeabsichtigtes Ein- oder Ausrücken eines Ganges ausgeschlossen ist. Wie dies aus Fig. 1 und 2, und da insbesondere aus der rechten Zustands-Position, erkennbar ist, kann in abgekoppeltem und verriegeltem Zustand der Schwinge, die Festsetzung der Schwinge sicher erfolgen und dabei gleichzeitig die Schubstange 1 ungehindert, beispielsweise zur Verschwenkung einer angekoppelten Schaltschwinge, wie im linken Zustandsbeispiel dargestellt, verschoben werden.

Wie bereits vorerwähnt, sind einer Schubstange 1 mehrere Koppelmechanismen mit Koppelbolzen 4 zugeordnet, wobei jeweils ein Koppelmechanismus mit einer Schaltschwinge 12 zusammenarbeitet. Dabei wird immer nur ein Koppelmechanismus betätigt, d.h. immer nur eine Schaltschwinge 12 ist über einen Koppelbolzen 4 an der Schaltschwinge 1 angekoppelt, wie in dem linken Zustandsfall der Zeichnung dargestellt. Alle übrigen Koppelmechanismen sind dabei nicht betätigt, d.h. alle übrigen Schaltschwingen 12 sind über die Koppelbolzen 4 in der Gehäusewand 3 unbeweglich festgesetzt. So wird durch die Schubstange 1 immer nur eine Schwinge 12 über den entsprechenden Koppelbolzen 4 bewegt, während die übrigen Schaltschwingen über die Koppelbolzen 4 unbeweglich festgesetzt bleiben. Erst wenn ein anderer Gang angewählt wird, wird, beispielsweise bei der in der Zeichnung links dargestellten Schaltschwinge, die Wähl- bzw. Koppelkraft 5 entfallen, wodurch der Koppelbolzen 4, durch die Kraft der Druckfeder 17, mit dem Koppelkopf 7 in die Öffnung 8 im Gehäuse 3 eingeschoben wird, die Schwinge 12 festsetzend. Gleichzeitig wird eine andere Schaltschwinge angewählt, beispielsweise die rechts in der Zeichnung dargestellte; es wird also die korrespondierende Koppel-Einrichtung betätigt, die der Koppelbolzen 4 aus der Öffnung 8 der Gehäusewand 3 heraus und in den kreuzförmigen Durchbruch 9 der Schubstange 1 so hineindrücken, daß der Koppelkopf 7 satt in den Querschlitz 10 einrastet. Danach kann diese neu angekoppelte Schaltschwinge nach links oder rechts in eine entsprechende Gangposition verschwenkt und dadurch über die Schaltgabel 14 das entsprechende Räderpaar aktiviert werden.

### Bezugszeichenliste

- 1: Schubstange
- 2: Schaltkraft-Richtung
- 3: Gehäusewand/gehäusefestes Teil
- 4: Koppelbolzen
- 5: Wähl- bzw. Koppelkraft
- 6: Koppelschaft
- 7: Koppelkopf
- 8: Gehäusedurchbruch/Öffnung
- 9: kreuzförmiger Durchbruch/Öffnung
- 10: Querschlitz
- 11: Längsschlitz
- 12: Schaltschwingen
- 13: Drehpunkt
- 14: Schaltgabel
- 15: Schaltschwingenarm
- 16: Führungszylinder
- 17: Druckfeder

## Patentansprüche

1. Schalteinrichtung für die Schaltungsbetätigung von Mehrstufenschaltgetrieben für Kraftfahrzeuge,
- mit mehreren, um einen gehäusefesten Drehpunkt (13) verschwenkbaren Schaltschwingen (12), die je einer Schaltmuffe zugeordnet sind;
- wobei der oberhalb des Drehpunktes (13) befindliche Schaltschwingenarm (15) der Schaltschwingen (12) über mindestens ein im wesentlichen zur Getrieberäderachse parallel wirksames Schaltelement (1, 4) in die Schaltstellungen verschoben wird,
dadurch **gekennzeichnet**,
- daß das mindestens eine Schaltelement, aus einer einzigen, parallel zur Räderachse in Neutral- und Gangschaltstellungen verschiebbaren Schubstange (1) und mehreren, jeweils den Schaltschwingen (12) zugeordneten, einzeln betätigbaren Koppelmechanismen besteht;
- daß ein Koppelmechanismus in unbetätigtem Zustand jeweils eine Schaltschwinge (12) an einem gehäusefesten Teil (3) unbeweglich festsetzt und gleichzeitig die Verschiebung der Schubstange (1) freigibt und
- daß ein Koppelmechanismus in betätigtem/eingerücktem Zustand, unter Einwirkung einer Koppelkraft, eine triebliche Verbindung zwischen der Schubstange (1) und einer Schaltschwinge (12) herstellt und gleichzeitig die Verbindung dieser Schaltschwinge (12) mit dem gehäusefesten Teil (3) löst.

2. Schalteinrichtung nach Anspruch 1, dadurch **gekennzeichnet**, daß der Koppelmechanismus einen senkrecht zur Schaltbewegungsrichtung der Schubstange (1) bzw. der Richtung der Schaltkraft (2) und gleichzeitig axial zum Schaltschwingenarm (15) verschiebbaren Koppelbolzen (4) aufweist, der mit seinem einen Ende an dem Schaltschwingenarm (15) verschieblich gelagert ist und mit seinem anderen Ende in ungekoppeltem Zustand in das gehäusefeste Teil (3) formschlüssig eingreift, gleichzeitig die Schubstange (1) verschiebbar freigebend oder in gekoppeltem Zustand in die weiterhin verschiebbare Schubstange (1) formschlüssig eingreift.

3. Schalteinrichtung nach Anspruch 2, dadurch **gekennzeichnet**, daß der Koppelmechanismus einen Koppelbolzen (4) aufweist, mit:
- einem mit dem Schaltschwingenarm (15) in Verbindung stehenden Koppelschaft (6),
- und einem Koppelkopf (7), der in entsprechende Ausnehmungen (10, 8) in der Schubstange (1) und in dem gehäusefesten Teil (3) formschlüssig eingreifend ein- und ausschiebbar ist.

4. Schalteinrichtung nach Anspruch 3, dadurch **gekennzeichnet**, daß die Ausnehmungen (8, 10) für den Koppelkopf (7) im gehäusefesten Teil (3) und in der Schubstange (1) in Neutralstellung der Schubstange (1) in Richtung der Koppelkraft (5) fluchtend zueinander angeordnet sind.

5. Schalteinrichtung nach Anspruch 3, dadurch **gekennzeichnet**, daß in der Schubstange (1) sich in Schaltrichtung erstreckende Langlöcher (11) vorgesehen sind, durch die in ungekoppeltem Zustand die Koppelschäfte (6) der Koppelbolzen (4) verschieblich hindurchreichen.

6. Schalteinrichtung nach Anspruch 3, dadurch **gekennzeichnet**, daß die Koppelbolzen (4) eine im wesentlichen T-förmige Ausbildung aufweisen, wobei die Koppelköpfe (7) quer zur Schaltrichtung (2) angeordnet sind und daß in der Schubstange (1) im wesentlichen kreuzförmige Ausnehmungen (9) vorgesehen sind, wobei deren Längsschlitze (11) die Langlöcher für den Durchtritt der Koppelschäfte und deren Querschlitze (10) zum Einrücken der Koppelköpfe (7) ausgelegt sind.

7. Schalteinrichtung nach Anspruch 6, dadurch **gekennzeichnet**, daß Koppelschaft (6) und Koppelkopf (7) jeweils einen im wesentlichen identischen, runden Querschnitt aufweisen.

8. Schaltreinrichtung nach Anspruch 6, dadurch gekennzeichnet, daß Koppelschaft (6) und Koppelkopf (7) jeweils einen im wesentlichen identischen, rechteckigen Querschnitt aufweisen.

9. Schalteinrichtung nach Anspruch 3, dadurch **gekennzeichnet**, daß die Koppelbolzen (4) eine im wesentlichen L-förmige Ausbildung aufweisen, während die Ausnehmungen in der Schubstange T-förmig ausgebildet sind.

10. Schalteinrichtung nach Anspruch 3, dadurch **gekennzeichnet**, daß die Koppelbolzen (4) im Schnitt quer zur Schaltrichtung eine im wesentlichen T-förmige Ausbildung aufweisen, wobei die Koppelköpfe (7) die Form eines Tellers aufweisen.

11. Schalteinrichtung nach Anspruch 1, dadurch **gekennzeichnet**, daß das gehäusefeste Teil (3) eine äußere Gehäusewand (3) ist.

12. Schalteinrichtung nach Anspruch 1, dadurch **gekennzeichnet**, daß das gehäusefeste Teil (3) ein an der Innen- oder Außenseite der Gehäusewand befestigtes Bauteil ist.

13. Schalteinrichtung nach Anspruch 1, dadurch **gekennzeichnet**, daß die Schubstange (1) zwischen der Gehäusewand (3) und dem äußeren Ende des Schaltschwingenarmes (15) angeordnet und aus Profilstahl, vorzugsweise Flachstahl, gefertigt ist.

14. Schalteinrichtung nach Anspruch 3, dadurch **gekennzeichnet**, daß der Koppelschaft (6) am äußeren Ende des Schaltschwingenarmes (15) in Richtung der Koppelkraft (5) verschieblich geführt angeordnet ist, wobei Koppelschaft (6) oder Arm (15) zu einem Führungsteil (16) aufgeweitet ist, in dem der jeweils andere Teil gleitet.

15. Schalteinrichtung nach Anspruch 14, dadurch **gekennzeichnet**, daß das äußere Ende des Schaltschwingenarmes (15) als Führungszylinder (16) aufgeweitet ist, in dem der stabförmige Koppelschaft (6) verschieblich gleitet und daß zwischen den beiden Teilen (16, 6) eine entgegen der Koppelkraft (5) wirksame Druckfeder (17) angeordnet ist.

16. Schalteinrichtung nach Anspruch 1, dadurch **gekennzeichnet**, daß die Wähl- oder Koppelkraft (5) durch eine Elektromagnet-Einrichtung erzeugt wird.

17. Schalteinrichtung nach Anspruch 1, dadurch **gekennzeichnet**, daß die Wähl- oder Koppelkraft (5) durch einen pneumatischen oder hydraulischen Zylinder erzeugt wird.

18. Schalteinrichtung nach Ansprüchen 16 und 17, dadurch **gekennzeichnet**, daß die Wähl- oder Koppelkraft-Einrichtungen an der Außenseite des Getriebegehäuses angeordnet sind und daß die Koppelbolzen (4) von der äußeren Gehäuseseite her durch die Öffnungen (8) in der Gehäusewand (3) nach Montage der Schubstange (1), einlegbar sind.

## Claims

1. Gear-changing arrangement for the gear-changing actuation of multi-stage gear-changing gearboxes for motor vehicles,
- having a number of gear-changing rockers (12) which can be pivoted about a point of rotation (13) integral with the casing and are each associated with a gear-changing sleeve;
- wherein the gear-changing rocker arm (15) of the gear-changing rockers (12), which is located above the point of rotation (13), is displaced into the gear-changing positions via at least one gear-changing element (1, 4) which operates essentially parallel to the axis of the gears in the gearbox,
**characterised in that**
- the gear-changing element, of which there is at least one, consists of a single thrust rod (1), which is displaceable parallel to the axis of the gears in the neutral and speed-changing positions, and of a number of individually actuatable coupling mechanisms associated with the gear-changing rockers (12) in each case;
- a coupling mechanism in the unactuated condition immovably fixes one gear-changing rocker (12) in each case on a part (3) integral with the casing and at the same time releases the displacement of the thrust rod (1) and
- a coupling mechanism in the actuated/engaged condition, under the effect of a coupling force, produces a driving connection between the thrust rod (1) and a gear-changing rocker (12) and at the same time severs the connection of the said gear-changing rocker (12) to the part (3) integral with the casing.

2. Gear-changing arrangement according to claim 1,
**characterised in that** the coupling mechanism has a coupling bolt (4) which can be displaced perpendicularly to the direction of gear-changing movement of the thrust rod (1) or to the direction of the gear-changing force (2) and, at the same time, axially in relation to the gear-changing rocker arm (15) and which is displaceably mounted, by one of its ends, on the gear-changing rocker arm (15) and, by its other end, in the uncoupled condition, engages in a form-locking manner in the part (3) integral with the casing, at the same time releasing the thrust rod (1) in a displaceable manner or, in the coupled condition, engages in a form-locking manner in the thrust rod (1) which can continue to be displaced.

3. Gear-changing arrangement according to claim 2,
**characterised in that** the coupling mechanism has a coupling bolt (4) with:
- a coupling shaft (6) which is connected to the gear-changing rocker arm (15),
- and a coupling head (7) which, engaging in a form-locking manner in corresponding cut-out portions (10, 8) in the thrust rod (1) and in the part (3) integral with the casing, can be thrust in and out.

4. Gear-changing arrangement according to claim 3,
**characterised in that** the cut-out portions (8, 10) for the coupling head (7) in the part (3) integral with the casing and in the thrust rod (1) are disposed, in the neutral position of the thrust rod (1), in alignment with one another in the direction of the coupling force (5).

5. Gear-changing arrangement according to claim 3,
**characterised in that** there are provided, in the thrust rod (1), oblong holes (11) which extend in the gear-changing direction and through which, in the uncoupled condition, the coupling shafts (6) of the coupling bolts (4) reach in a displaceable manner.

6. Gear-changing arrangement according to claim 3,
**characterised in that** the coupling bolts (4) have an essentially T-shaped construction, the coupling heads (7) being disposed transversely to the gear-changing direction (2), and there are provided, in the thrust rod (1), essentially cross-shaped cut-out portions (9), the longitudinal slots (11) of which are the oblong holes for the passage of the coupling shafts and the transverse slots (10) of which are designed for the engagement of the coupling heads (7).

7. Gear-changing arrangement according to claim 6,
**characterised in that** the coupling shaft (6) and coupling head (7) have an essentially identical, round cross-section in each case.

8. Gear-changing arrangement according to claim 6,
**characterised in that** the coupling shaft (6) and coupling head (7) have an essentially identical, rectangular cross-section in each case.

9. Gear-changing arrangement according to claim 3,
**characterised in that** the coupling bolts (4) have an essentially L-shaped construction, whereas the cut-out portions in the thrust rod are constructed in the shape of a T.

10. Gear-changing arrangement according to claim 3,
**characterised in that** the coupling bolts (4) have an essentially T-shaped construction in section transversely to the gear-changing direction, the coupling heads (7) having the shape of a disc.

11. Gear-changing arrangement according to claim 1,
**characterised in that** the part (3) integral with the casing is an outer wall (3) of the casing.

12. Gear-changing arrangement according to claim 1,
**characterised in that** the part (3) integral with the casing is a component fastened on the inside or outside of the casing wall.

13. Gear-changing arrangement according to claim 1,
**characterised in that** the thrust rod (1) is disposed between the casing wall (3) and the outer end of the gear-changing rocker arm (15) and is manufactured from sectional steel, preferably flat steel.

14. Gear-changing arrangement according to claim 3,
**characterised in that** the coupling shaft (6) is disposed at the outer end of the gear-changing rocker arm (15) in such a way as to be displaceably guided in the direction of the coupling force (5), the coupling shaft (6) or arm (15) being widened to form a guide part (16) in which the other part in each case slides.

15. Gear-changing arrangement according to claim 14,
**characterised in that** the outer end of the gear-changing rocker arm (15) is widened in the form of a guide cylinder (16) in which the bar-shaped coupling shaft (6) slides in a displaceable manner, and there is disposed, between the two parts (16, 6), a compression spring (17) which operates against the coupling force (5).

16. Gear-changing arrangement according to claim 1,
**characterised in that** the selecting or coupling force (5) is produced by an electromagnet arrangement.

17. Gear-changing arrangement according to claim 1,
**characterised in that** the selecting or coupling force (5) is produced by a pneumatic or hydraulic cylinder.

18. Gear-changing arrangement according to claims 16 and 17,
**characterised in that** the selecting or coupling force arrangements are disposed on the outside of the gearbox casing and the coupling bolts (4) can be inserted from the outer side of the casing through the apertures (8) in the casing wall (3) after installation of the thrust rod (1).

## Revendications

1. Système de changement de vitesse pour la commande de boîtes de vitesses multi-étagées de véhicules automobiles, comportant
- plusieurs fourches de commande oscillantes (12) autour d'un point de rotation fixe (13) solidaire de la boîte, et associées respectivement à un manchon coulissant;
- et dans lequel le bras de fourche de commande (15) des fourches de commande (12) disposé au-dessus du point de rotation (13) est déplacé dans les positions d'enclenchement par l'intermédiaire d'au moins un élément de commande (1, 4) sensiblement parallèle à l'axe d'entraînement des roues,
**caractérisé** en ce que
- ledit élément de commande est constitué d'une tringle de poussée (1), coulissant parallèlement à l'axe des roues dans la position neutre et la position d'enclenchement des vitesses, et de plusieurs mécanismes de couplage commandés individuellement respectivement associés aux fourches de commande (12);
- en ce qu'un mécanisme de couplage, lorsqu'il est au repos, maintient la fourche de commande (12) correspondante immobile et en appui contre une pièce fixe (3) solidaire de la boîte et simultanément libère la tringle de poussée coulissante (1), et
- en ce que le mécanisme de couplage, lorsqu'il est en position activée/enclenchée, génère une liaison d'entraînement, sous l'effet d'une force de couplage, entre la tringle de poussée (1) et une fourche de commande (12) et libère simultanément la liaison entre cette fourche de commande (12) et la pièce fixe (3) solidaire de la boîte.

2. Système de changement de vitesse selon la revendication 1,
**caractérisé** en ce que le mécanisme de couplage comporte un goujon de couplage (4) coulissant, perpendiculaire à la direction de déplacement de la tringle de poussée (1), respectivement à la direction de la force de commande (2), et simultanément axialement selon le bras de fourche de commande (15), ce goujon étant en appui mobile par une de ses extrémités contre le bras de fourche de commande et ce goujon étant engagé positivement par son autre extrémité, mais à l'état découplé, dans la pièce fixe (3) solidaire de la boîte, tout en s'engageant positivement simultanément dans la tringle de poussée (1) ou en libérant ladite tringle de poussée (1) par coulissement.

3. Système de changement de vitesse selon la revendication 2,
**caractérisé** en ce que le mécanisme de couplage comporte un goujon de couplage (4) pourvu d'un axe de couplage (6) qui est en liaison avec un bras de fourche de commande (15), et une tête de couplage (7) agencée pour s'engager positivement et pour être dégagée d'évidements appropriés (10, 8) de la tringle de poussée (1) et de la pièce fixe (3) solidaire de la boîte.

4. Système de changement de vitesse selon la revendication 3,
**caractérisé** en ce que les évidements (8, 10) logeant la tête de couplage (7) sont disposés de façon alignée l'un par rapport à l'autre selon la direction de la force de couplage (5), dans la pièce fixe (3) solidaire de la boîte et dans la tringle de poussée (1) lorsqu'elle est dans sa position neutre.

5. Système de changement de vitesse selon la revendication 3,
**caractérisé** en ce que la tringle de couplage (1) comporte des ouvertures oblongues (11) disposées selon la direction de commande, ces ouvertures étant traversées par les axes de couplage (6) des goujons de couplage (4) dans la position découplée.

6. Système de changement de vitesse selon la revendication 3,
**caractérisé** en ce que les goujons de couplage (4) sont sensiblement en forme de T, les têtes de couplage (7) étant disposées transversalement par rapport à la direction de commande (2), et en ce que la tringle de commande (1) comporte des évidements (9) sensiblement cruciformes, dont les bras longitudinaux (11) sont adaptés aux ouvertures oblongues pour le passage des axes de couplage et dont les ouvertures transversales (10) sont agencées pour recevoir les têtes de couplage (7).

7. Système de changement de vitesse selon la revendication 6,
**caractérisé** en ce que l'axe de couplage (6) et la tête de couplage (7) ont respectivement une section transversale circulaire identique.

8. Système de changement de vitesse selon la revendication 6,
**caractérisé** en ce que l'axe de couplage (6) et la tête de couplage (7) ont respectivement une section transversale carrée identique.

9. Système de changement de vitesse selon la revendication 3,
**caractérisé** en ce que le goujon de couplage (4) est sensiblement en forme de L, alors que l'évidement dans la tringle de poussée est sensiblement en forme de T.

10. Système de changement de vitesse selon la revendication 3,
**caractérisé** en ce que le goujon de couplage (4) a une section transversale par rapport à la direction de commande en forme en T, alors que les têtes de couplage (7) sont en forme d'assiette.

11. Système de changement de vitesse selon la revendication 1,
**caractérisé** en ce que la pièce fixe (3) solidaire de la boîte est une paroi extérieure (3).

12. Système de changement de vitesse selon la revendication 1,
**caractérisé** en ce que la pièce fixe (3) solidaire de la boîte est un composant fixé à l'intérieur ou à l'extérieur d'une paroi extérieure.

13. Système de changement de vitesse selon la revendication 1,
**caractérisé** en ce que la tringle de poussée (1) est montée entre la paroi extérieure (3) et l'extrémité extérieure du bras de fourche de commande (15) et est constituée d'un profilé en acier, de préférence en fer plat.

14. Système de changement de vitesse selon la revendication 3,
**caractérisé** en ce que l'axe de couplage (6) est monté à l'extrémité extérieure du bras de fourche de commande (15) de manière à être guidé axialement selon la direction de la force de couplage (5), l'axe de couplage (6) ou le bras (15) étant prolongé par une pièce de guidage (16) dans laquelle l'autre pièce peut coulisser.

15. Système de changement de vitesse selon la revendication 14,
**caractérisé** en ce que l'extrémité extérieure du bras de fourche de commande (15) est prolongée par un cylindre de guidage (16) dans lequel coulisse axialement l'axe de couplage (6) en forme de tringle, et en ce qu'un ressort de poussée (17) est disposé entre les deux éléments (16, 6), ce ressort s'opposant à la force de couplage (5).

16. Système de changement de vitesse selon la revendication 1,
**caractérisé** en ce que la force de sélection ou de couplage (5) est générée par un dispositif électromagnétique.

17. Système de changement de vitesse selon la revendication 1,
**caractérisé** en ce que la force de sélection ou de couplage (5) est générée par un pistqn hydraulique ou pneumatique.

18. Système de changement de vitesse selon les revendications 16 ou 17,
**caractérisé** en ce que les installations de sélection ou de couplage sont montées à l'extérieur de la boîte de vitesses, et en ce que les goujons de couplage (4) sont introduits depuis l'extérieur de la boîte, à travers les ouvertures (8) ménagées dans la paroi de la boîte (3) après montage de la tringle de poussée (1).
